# EUROPEAN PATENT APPLICATION

(11) **EP 1 447 894 A2**
(43) Date of publication of application: **18.08.2004**
(21) Application number: 04386005.5
(22) Date of filing: 12.02.2004
(51) Int. Cl.: H02G 3/10, H02G 3/30

(54) **Flat plastic rigid or flexible pipes for electrical installation and boxes for distribution and reception of electrical currents through holes in the shape of a parallelogram**

(30) Priority: 17.02.2003 GR 2003100082
(71) Applicant: Kosmidou, Eftychia, 57001 Thermi, Thessaloniki (GR)
(72) Inventor: Kosmidou, Eftychia, 57001 Thermi, Thessaloniki (GR)

(57) **Abstract**

Flat PVC plastic self-adhesive or glued-on rigid or flexible, bare or spiral pipes for the electrical installation [fig. 3 A and B (18-23)] of strong and weak electrical currents positioned along the wall and boxes for the distribution [fig. 5 (12-13)] and reception of electrical currents [fig. 5 (14)] with holes in the shape of a parallelogram [fig. 5 (15)] affixed to the unexposed wall [fog. 6 (16)], their guide dimensions being 10 to 100 mm in width and 4 to 10 mm in height. In addition, our invention includes boxes holding the branch pipes with holes in the shape of a parallelogram affixed with glue to the walls, all the building elements and wherever necessary with standardised holes allowing free movement through the opening, aiming to avoid damages to the supporting structure (walls, cement) [fig. 1(1)].
The advantages of this invention are: the maintenance of the construction's building materials, trouble-free positioning, saving time and money by about 50%, its dependability and increased functionality, as well as the ability to easily add, remove or substitute additional wires.

## Description

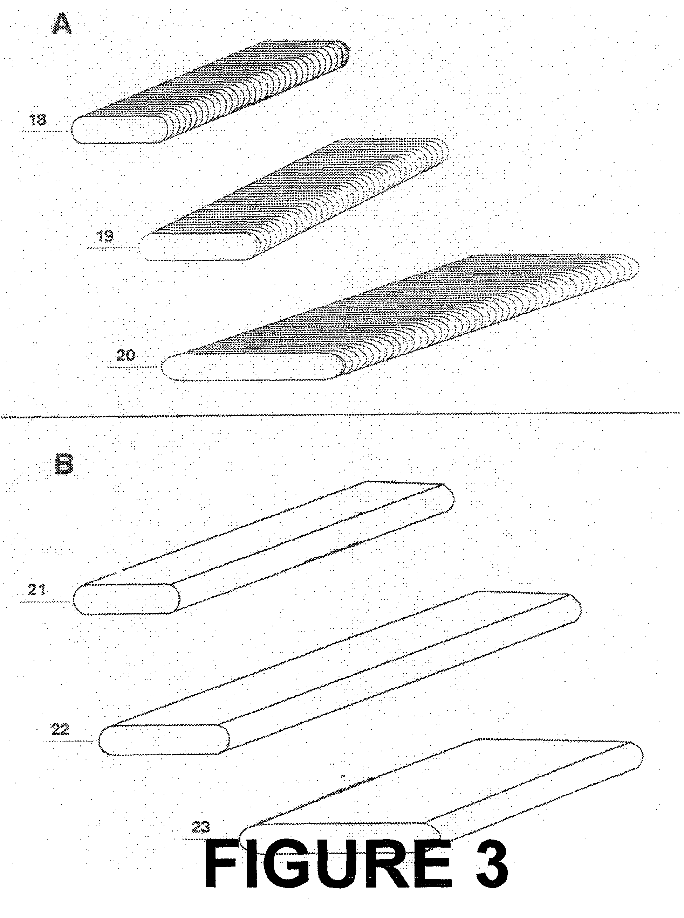

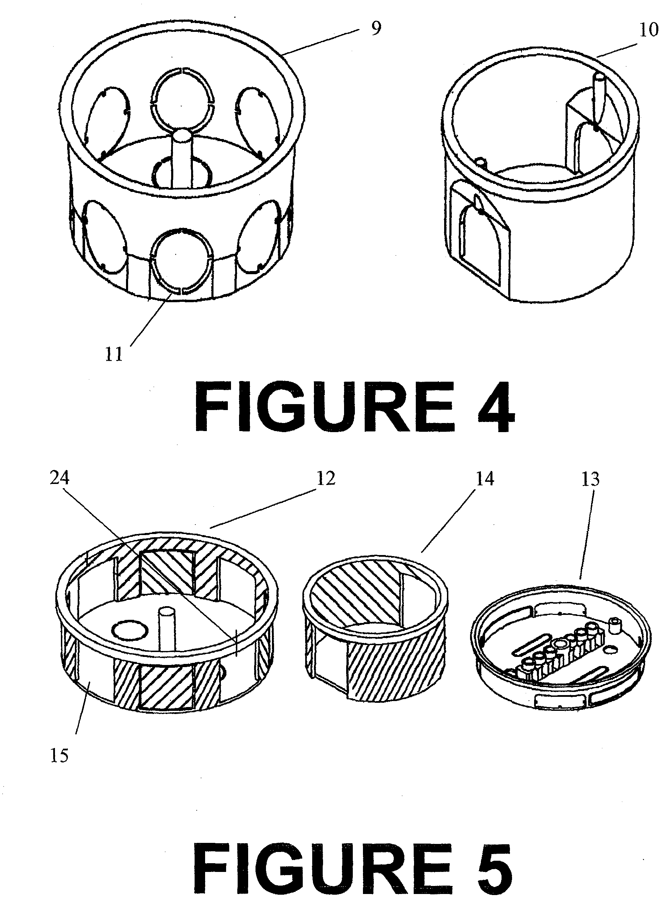

The invention refers to self-adhesive or affixed flat plastic PVC [fig. 3 A and B (18) to (23)] rigid (straight), [fig. 3 B (21) to (23)], or flexible (corrugated) [fig. 3 A (18) to (20)] pipes for the electrical installation of strong and weak currents positioned along the wall or through boxes for the distribution [fig. 5 (12) and (13)] and reception of electrical currents [fig. 5 (14)] through holes in the shape of a parallelogram [fig 5 (15)] which are affixed to the unexposed surface of the wall or in the hole from the highest to the lowest edge.

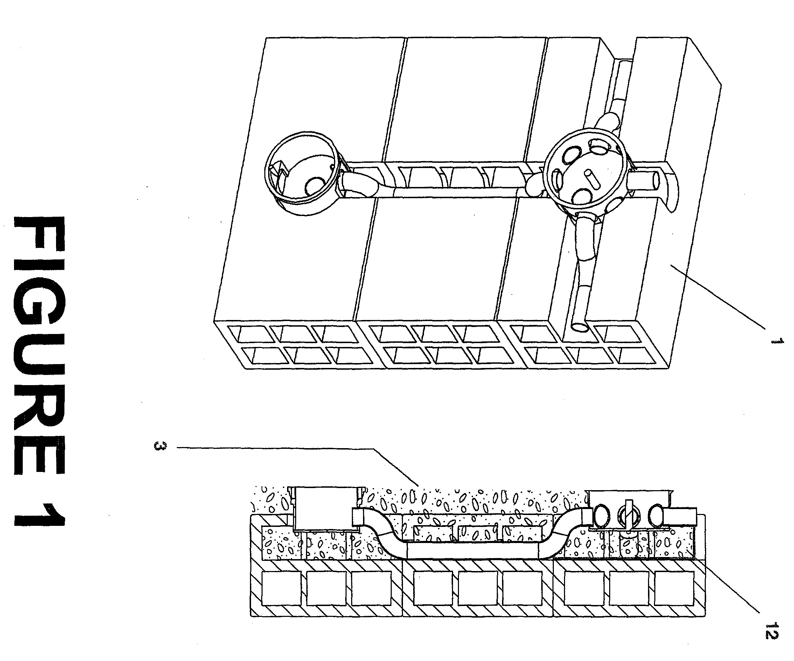

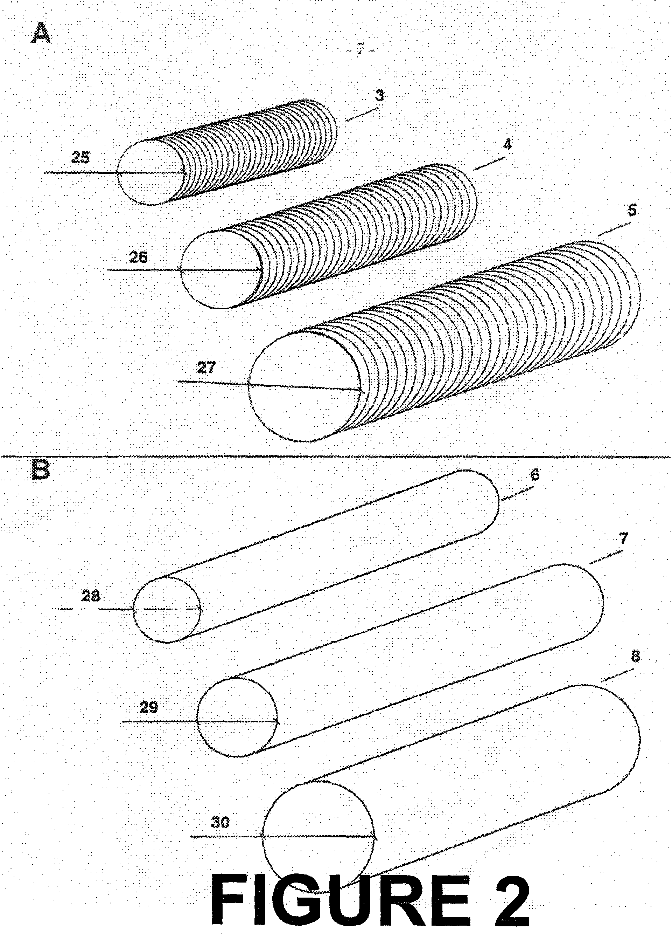

According to the legislation, only PVC pipes can be used in electrical installations due to their fire resistance and insulation. For this reason, all the plastic parts used in the present study are made of PVC.
The methods used today are the following:
1. According to the first method, one digs a hole through the wall built with bricks or concrete [fig. 1 (1)] which are the static elements of the construction. In the dug out area, one places a round, plastic and rigid bare pipe [fig. 2 B (6), (7), (8)] or a flexible corrugated pipe [fig. 2 A (3), (4), (5)], the dimensions of the pipe being ⌀ 13.5 mm [fig 2 A and B (25) and (28)], ⌀ 16 mm [fig 2 A and B (26) and (29)], and ⌀ 23 mm [fig. 2 A and B (27) and (30)]. Once this is done, round wires are passed through the above pipes, the wires are connected and the wall is plastered with lime mortar of a 15 mm to a 25 mm thickness [fig. 1 (3)]. In this case, the static component of the construction is damaged due to the digging.
2. According to the second method, wires, in a flat shape, are directly fixed to the roof, beams, pillars and walls of the construction and are then directly plastered with lime mortar ranging from 15 mm to 25mm in thickness. Any damage causes great problems concerning reparation, since all the wires are taken to pieces and the lime mortar and paint of the construction are destroyed during this process.

Both of the above methods use built-in boxes containing the branch pipes [fig. 4 (9)] for the cutting off and reception of electrical currents [fig. 4 (10)] which have a standardised round hole halfway through their height [fig. 4 (11)], through which a round plastic piped is passed. The built-in boxes are cemented in the dug out hole in the wall so that the top surface can be even with the lime mortar [fig. 1 (12)]. These methods cause problems in terms of artistry and they display poor workmanship, since, during the installation, the cement or lime mortar used for securing the materials is liquefied, with the result that the box is pushed by the mechanical stresses in the plastic pipes, ending up slanted or skew, and above all, uncalculated, demonstrating poor workmanship. Another significant factor which needs to be taken into account is the fact that the above methods are cause for considerable delay.

One of the benefits of our new invention is that it deals with all the above mentioned problems related to the two methods and the boxes for the distribution [fig. 9 (9)] and reception [fig. 4 (10)] of electrical currents directly and effectively. Additionally, working time is reduced significantly (by about 50%) and as a result, so are the labour costs.

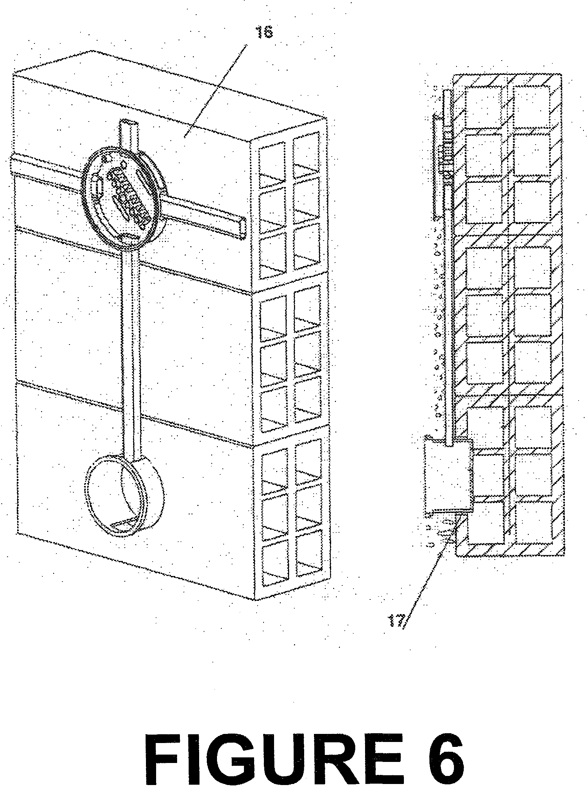

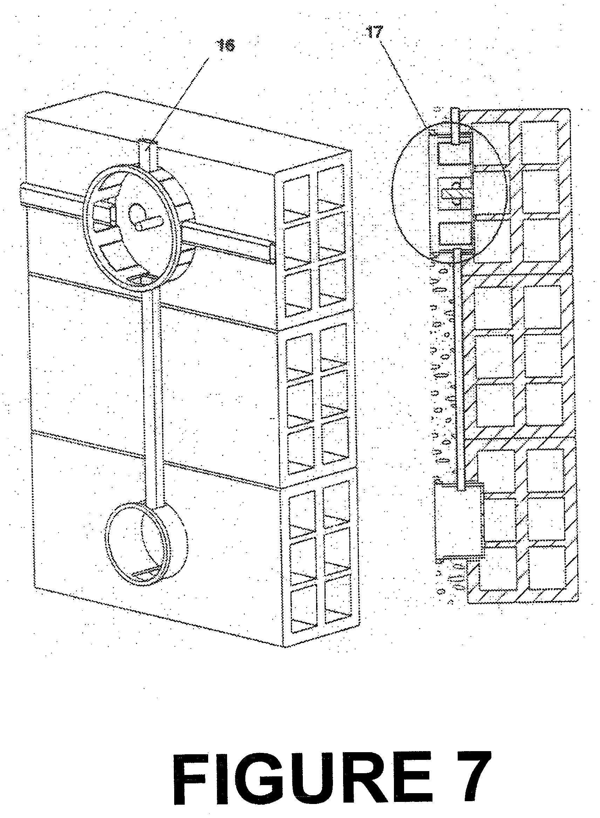

The flat self-adhesive or affixed plastic rigid [fig. 3 B (21), (22), (23)] or flexible pipe [fig. 3 A (18), (19), (20)] for the electrical installation of strong and weak currents along the wall [fig. 6 (16)] and the boxes for the distribution [fig. 5 (12), (13)] and reception of electrical currents [fig. 5 (14)] through holes in the shape of a parallelogram [fig. 5 (15)], which are affixed to the unexposed part of the wall through this invention [fig. 6 (16)] or are fitted into the already opened hole allowing them free inward and outward movement through the hole at the desired point of support [fig. 7 (17)], deal with the problems caused by the methods used today by constructing and installing flat plastic PVC pipes, both rigid [fig. 3 B (21), (22), (23)] and flexible [fig. 3 A (18), (19), (20)], a method of our own invention. The pipes are affixed to the wall without having to dig [fig. 6 (16)]. The pipes are flat shaped [fig. 3 A and B] and not round [fig. 2 A and B] with cross-sectional dimensions of X from 10 to 100 mm in width and Y from 4 to 10 mm in height [fig. 3 A and B (18) to (23)], due to the legal restrictions regarding the size of the pipes for electrical installation. The capacity of these pipes in terms of the amount of wires it can hold does not change in relation to the old method, but it does reduce the time, problems and cost of installation. The positioning of the flat plastic pipes is done with self-adhesive tape or with a layer of glue alongside the wall or on the pipe itself [fig. 6, 7 (16)].

At the branch points, we place the boxes that we invented for the distribution [fig. 5 (12). (13)] and reception of electrical currents [fig. 5 (14)] which have a standardised hole that is ∅ 80 mm [fig. 5 (24)] in dimension and holes in the shape of a parallelogram [fig. 5 (15)]. These boxes can either be affixed to any desired point on the wall [fig. 6(16)] or inserted in holes with predetermined, to a small extent, dimensions on the wall allowing free movement through the opening [fig. 7 (17)], without encountering the problems of the previous technical situation.

Our newly invented self-adhesive flat plastic pipes [fig. 3 A and B] and our boxes for the distribution [fig. 5 (12), (13)] and reception of electrical currents [fig. 5 (14)] make the installation of pipes easy, without having to dig a hole through the wall, therefore damaging the static properties and other building materials [fig. 6 (16)] of the wall, you avoid future problems involving the pipes or damages to the lime mortar [fig. 1 (3)] and paint, time and money is saved through the trouble-free manner of installation and maintenance, and it makes it possible to add extra wires if necessary in the future.
Figure 1 (1), (3) and (12) on page 6 presents the existent technical situation in a side view and cross-sectional depiction.
Figure 2 A and B (25) to (30) on page 7 presents the different types and dimensions of the pipes used.
Figure 3 A and B (18) to (23) on page 8 shows the pipes we invented as they are suggested.
Figure 4 on page 9 shows the branch pipes [fig. 4 (9)] for the cutting off [fig. 4 (10)] and reception of electrical currents [fig. 4 (10)] used till now in the existent technical situation.
Figure 5 (12), (13), (14) on page 9 shows the new type of box referred to in our invention.
Figure 6 on page 10 shows the positioning of the self-adhesive flat pipes [fig. 6 (16)] and the boxes containing the branch pipes [fig. 6 (17)].
Figure 7 on page 11 shows the combined positioning, on the wall, of both the self-adhesive flat pipes [fig. 7 (16)] and the built-in boxes with the holes in the shape of a parallelogram allowing free movement through the opening [fig. 7 (17)].

One way to apply this invention is by buying our own flat PVC plastic pipes, both rigid and flexible, in the size needed for its electrical installation in the building, affixing them to the walls and other building materials of the building according to the electrical installation plan, opening holes for the branch-pipes to go through wherever necessary, and affixing or applying boxes for the distribution and reception of electrical currents for the insertion of the additional wires and their connection.

## Claims

1. The invention claims the production and formation of pipes in a flat shape [fig. 3 A and B] made of PVC and manufactured by Extruder or other similar machines for bare [fig. 3 B (21-23)] and/ or spiral pipes [fig. 3 A (18-20)], rigid [fig. 3 B (21-23)] and/ or flexible [fig. 3 A (18-20)] which will be affixed to the wall [fig. 6 (16)] instead of being inserted through the broken wall [fig. 1 (1)], so that the wall and supporting elements do not lose their properties, thus providing protection against damage. The cross-sectional guide dimensions of the above pipes are:
a) X width from 10 mm to 100 mm
b) Y height from 4 mm to 10 mm
This is due to the fact that the legislation does not allow the plaster coating to be less than 10 mm and more than 15 mm.

2. Additionally, the invention claims, in relation to the above mentioned claim, the manufacture of PVC which is approved by the legislation for electrical installations and will be manufactured by using Extruder or other similar machines.

3. The invention also claims the application of the above flat pipes with glue or self-adhesive tape on the wall or on the flat pipe itself and the opening of standardised holes in the wall where the control and receiving points of electrical currents are placed.

4. The invention also includes the box for the distribution [fig. 5 (12-13)] and reception of electrical currents [fig. 5 (14)] which can be self-adhesive, affixed to the wall with glue or it can be built-in allowing free movement through the opening. The box has standardised holes that are ⌀ 80 mm in size [fig. 5 (24)] with openings in the shape of a parallelogram on its sides [fig. 5 (15)] made out of PVC which is approved for electrical installations and manufactured by plastic machines using a cast.
